# EUROPEAN PATENT SPECIFICATION

(11) **EP 3 516 159 B1**
(45) Date of publication and mention of the grant of the patent: **22.11.2023**
(21) Application number: 16916923.2
(22) Date of filing: 20.09.2016
(51) Int. Cl.: E21B 33/12, E21B 33/128, E21B 17/00

(54) **HIGH EXPANSION METAL BACK-UP RING FOR PACKERS AND BRIDGE PLUGS**
STÜTZRING MIT HOHER AUSDEHNUNG FÜR PACKER UND BRÜCKENSTOPFEN
BAGUE DE SECOURS MÉTALLIQUE À HAUTE CAPACITÉ D'EXPANSION POUR GARNITURES D'ÉTANCHÉITÉ ET OBTURATEURS DE TUBAGE

(43) Date of publication of application: 31.07.2019
(73) Proprietor: Halliburton Energy Services, Inc., Houston, TX 77032-3219 (US)
(72) Inventor: RICHARDS, William Mark, Flower Mound, Texas 75028 (US); HENDERSON, William David, Tioga, Texas 76271 (US)
(74) Representative: Paulraj, Leonita Theresa
(86) International application number: PCT/US2016/052645
(87) International publication number: WO 2018/056951

(56) References cited:
- WO-A1-2008/111843
- WO-A1-2015/028257
- US-A- 2 670 797
- US-A1- 2002 043 368
- US-A1- 2009 126 925
- US-A1- 2013 192 853
- US-A1- 2016 084 036
- US-A1- 2016 145 957
- US-B1- 9 260 936

## Description

### BACKGROUND

In the drilling, completion, or reworking of oil wells, a great variety of downhole tools are used including packer assemblies and bridge plugs. Packer assemblies may be used in a wellbore to separate the wellbore into one or more zones. A packer assembly may include a packer element capable of providing an annular seal between a tubing string and a casing string, a slip that can retain the packer assembly in a position by gripping the casing string, a wedge that supports the slip, and a mandrel that provides support to the assembly.

Current packer assembly designs include a tubing string with mechanical set or hydraulic pressure set element packers thereabout which provide for well segment isolation. The packers, which are energized with mechanical force or force from a hydraulic piston, are used to isolate segments of the well, and the tubing is used to convey treatment fluids to the isolated segment. Such packers may be limited with respect to pressure capabilities as well as durability under high pressure conditions.

US2670797A discloses a gripper or gripping element for incorporation in structures such as slips, plugs, hangers, and like equipment. WO2008/111843A1 discloses a sealing and/or anchoring element for use in pipelines. US2016/145957A1, considered the closest prior art, discloses a downhole tool having a mandrel with one or more sets of threads; a fingered member disposed around the mandrel; and an insert positioned between the fingered member and the first conical member, and in proximity with and end of the fingered member, wherein the fingered member comprises a plurality of fingers configured to move from a first position to a second position. US2013/192853A1 discloses a back-up ring assembly for a wellbore packer that acts as an extrusion limiter for a packaging element and engages the wellbore bore, also operating as a slip to anchor the packer in place.

### BRIEF DESCRIPTION OF THE DRAWINGS

The following figures are included to illustrate certain aspects of the present invention, and should not be viewed as exclusive embodiments. The subject matter disclosed is capable of considerable modification, alteration, and equivalents in form and function, as will occur to one having ordinary skill in the art and having the benefit of this disclosure.
Figure 1 is a longitudinal cross-section of a packer assembly according to embodiments of the disclosure.
Figure 2A is a cross-sectional schematic view of several elements of a relaxed packer assembly according to embodiments of the disclosure.
Figure 2B is a cross-sectional schematic view of several elements of an expanded packer assembly according to embodiments of the disclosure.
Figures 3A-C depict a back-up ring according to embodiments of the disclosure.
Figure 4 depicts a well system with packer assemblies according to certain embodiments of the present invention.

### DETAILED DESCRIPTION

The disclosure is directed to a back-up ring that expands up a ramp/conical surface on a retainer to retain a packer element. The back-up ring may also retain sealing pressure inside the packer element, and may prevent extrusion of the packer element.

In an embodiment, a method of retaining a packing element comprises: utilizing a back-up ring assembly in contact with at least one packing element, the assembly comprising: at least one wedge shaped spiral ring comprising: at least one outer circumferential face configured to contact a wellbore casing or liner; at least one conical, inner circumferential face configured to contact at least one of: a portion of retainer, a portion of a retainer with a conical face, a portion of a mandrel, and combinations thereof; and an axial end face configured to contact the at least one packing element. The method may further comprise at least one retainer, wherein the at least one wedge shaped spiral ring is located between the at least one packing element and the at least one retainer. In an embodiment, the method may further comprise a mandrel, wherein the at least one wedge shaped spiral ring, the at least one packing element and the at least one retainer are located around the mandrel. In another embodiment, the method may further comprise expanding the at least one wedge shaped spiral ring between the at least one retainer and the at least one packing element thereby forming a labyrinth seal preventing packing element extrusion. The at least one wedge shaped spiral ring may act as a spring force as it expands up the conical face of the at least one retainer and contacts the casing or liner. The method may further comprise relaxing the at least one wedge shaped spiral ring, wherein the at least one ring returns to an unexpanded configuration. In another embodiment, the method may further comprise retrieving the at least one wedge shaped spiral ring from the wellbore. In an exemplary embodiment, the assembly comprises two retainers, two wedge shaped spiral rings, and one packing element, wherein each retainer is on a different side of the packing element, and each wedge shaped spiral ring is between an individual packing element and an individual retainer. The at least one wedge shaped spiral ring may be cut as one continuous spiral. In an embodiment, the spiral cut is about 0 to about 20 degrees from vertical. In some embodiments, the at least one ring is a 3D printed ring. In an embodiment, the angle of at least one conical, inner circumferential face may be about 5 to about 60 degrees. In an additional embodiment, the at least one retainer comprises a conical face, wherein the angle of the conical face is about 5 to about 60 degrees.

In an embodiment, a back-up ring assembly comprises: at least one wedge shaped spiral ring comprising: at least one outer circumferential face configured to contact a wellbore casing or liner; at least one conical, inner circumferential face configured to contact at least one of: a portion of a retainer, a portion of a retainer with a conical face, a portion of a mandrel, and combinations thereof; and an axial end face configured to contact a packing element. In an embodiment, the assembly further comprises at least one packing element and at least one retainer, wherein the at least one wedge shaped spiral ring is located between the at least one packing element and the at least one retainer. In one embodiment, the assembly further comprises a mandrel, wherein the at least one wedge shaped spiral ring, the at least one packing element and the at least one retainer are located around the mandrel. The at least one wedge shaped spiral ring in an expanded condition between the at least one retainer and the at least one compressed packing element may form a labyrinth seal. In an embodiment, the at least one wedge shaped spiral ring in an expanded condition contacts a casing or liner. In an exemplary embodiment, the assembly comprises two retainers, two wedge shaped spiral rings, and one packing element, wherein each retainer is on a different side of the packing element, and each wedge shaped spiral ring is between an individual packing element and an individual retainer. In another embodiment, the assembly further comprises a plug disposed within the mandrel. The at least one wedge shaped spiral ring may be cut as one continuous spiral. In an embodiment, the spiral cut is about 0 to about 20 degrees from vertical. In some embodiments, the at least one wedge shaped spiral ring is a 3D printed ring. In an embodiment, the angle of at least one conical, inner circumferential face may be about 5 to about 60 degrees. In an additional embodiment, the at least one retainer comprises a conical face, wherein the angle of the conical face is about 5 to about 60 degrees.

In an embodiment, a downhole assembly comprises: an elongate mandrel configured to be placed in a wellbore casing or liner; a retainer configured to slideably engage along the mandrel, wherein said retainer comprises a conical face; a packing element configured to slide along the mandrel; at least one wedge shaped spiral ring disposed between the retainer and the packing element, the ring comprising: at least one outer circumferential face configured to contact the casing or string; at least one conical, inner circumferential face configured to contact at least one of: a portion of the retainer, a portion of the conical face of the retainer, a portion of the mandrel, and combinations thereof; and an axial end face configured to contact the packing element. In another embodiment, the assembly further comprises a plug disposed within the mandrel.

The following illustrative examples are given to introduce the general subject matter discussed here and are not intended to limit the scope of the disclosed concepts. The following sections describe various additional embodiments and examples with reference to the drawings in which like numerals indicate like elements, and directional descriptions are used to describe the illustrative embodiments but, like the illustrative embodiments, should not be used to limit the present disclosure.

### Packer Assembly

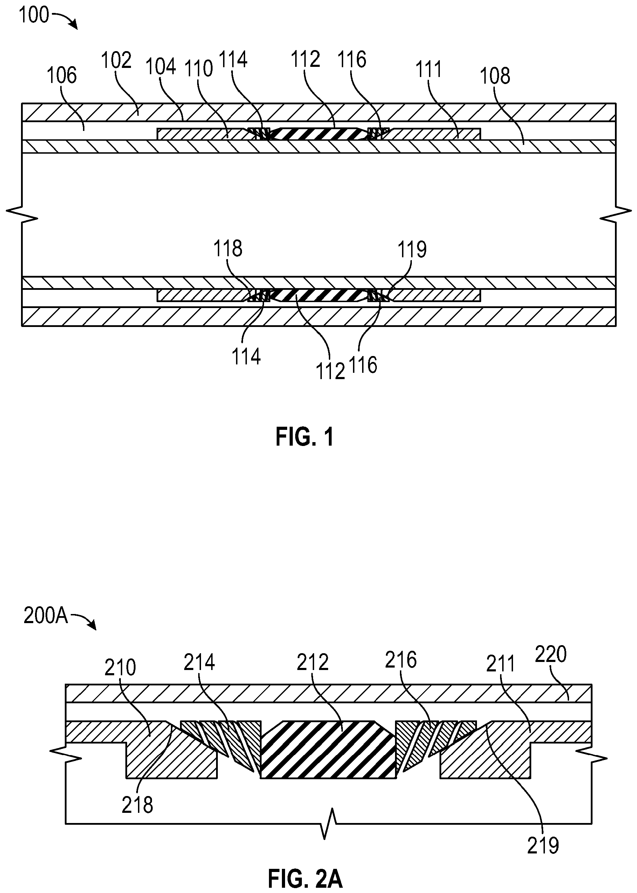

A packer assembly according to an embodiment of the disclosure may include a mandrel, at least one retainer, at least one back-up ring, and a packer element. FIG. 1 is a longitudinal cross-section of a packer assembly embodiment 100 in an unset or run-in condition. Casing 102 has an inner surface 104 and an annulus 106 is defined between casing 102 and mandrel 108. Retainers 110, 111 expand packer element 112 as the retainers 110, 111 are drawn towards each other. Back-up rings 114, 116 are disposed between the retainers 110, 111 and the packer element 112. As packer element 112 is expanded outward toward the casing inner surface 104, the back-up rings 114, 116 ride up the ramps 118, 119 on the retainers 110, 111 on either side of packing element 112, thereby performing at least one of the following: retaining packing element 112, retaining sealing pressure inside the packer elements, preventing its extrusion by creating a labyrinth seal, and combinations thereof.

In some embodiments, the aforementioned assembly contains a plug (not shown) connected within the mandrel by matching threads, pins, welding, or any other suitable means, and said assembly is referred to as a bridge plug. The plug has a seal located between plug and the internal diameter of the mandrel to prevent fluid flow therebetween. Packer assemblies typically have at least one means for allowing fluid communication through the tool. Packers may allow for the controlling of fluid passage therethrough by way of one or more valve mechanisms which may be integral to the packer body or which may be externally attached to the packer body. Such valve mechanisms are not shown in the drawings of the present document. Packer tools may be deployed in wellbores having casings or other such annular structure or geometry in which the tool may be set.

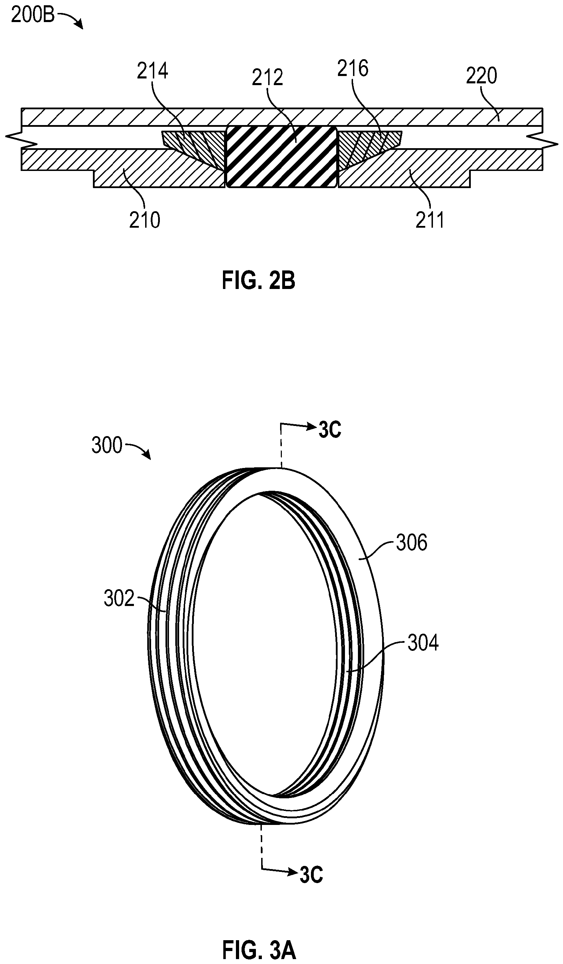

FIG. 2A is a cross-sectional schematic view of several elements of a packer assembly 200A in a relaxed state, otherwise known as an unset or run-in condition. Retainers 210, 211 expand packer element 212 as the retainers 210, 211 are drawn towards each other. Back-up rings 214, 216 are disposed between the retainers 210, 211 and the packer element 212. As packer element 212 is expanded outward toward the casing inner surface 220, the back-up rings 214, 216 ride up the ramps 218, 219 on the retainers 210, 211 on either side of packing element 212. The expanded packer element assembly 200B is the result. The back-up rings 214, 216 retain packing element 212 and preventing its extrusion by creating a labyrinth seal.

The retainers may have a ramp shaped face 218, 219 on the end that comes into contact with the back-up ring and the packer element. The angle of the ramp may be any angle that can accept the corresponding conical shaped face of the back-up ring and allow the ring to slide up the ramp as the packer element is expanded. The angle may depend on the geometry of the gap between the retainer and the casing. In an embodiment, the angle is about 5 to about 60 degrees. In another embodiment, the angle is about 20 to about 35 degrees.

### Back-up Rings

The back-up rings of the present disclosure may retain the packer element and prevent extrusion of the packer element.

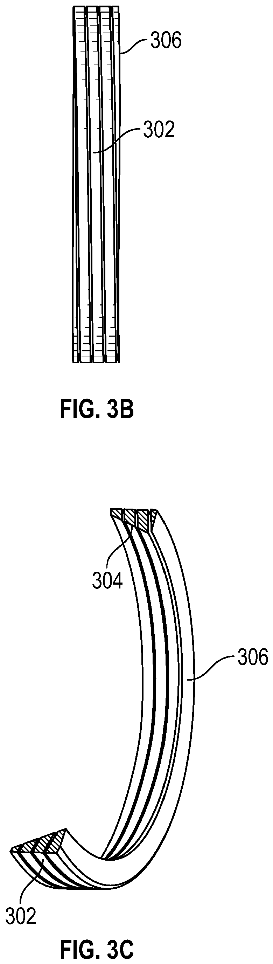

FIGs. 3A-C depict a back-up ring according to an embodiment of the disclosure. The basic construction of the back-up ring may be a wedge with a spiral cut. Back-up ring 300 includes at least one outer circumferential face 302, at least one conical, inner circumferential face 304, and an axial end face 306. The outer circumferential face 302 may be configured to contact a wellbore casing or liner. The conical, inner circumferential face 304 may contact at least one of a portion of a retainer, a portion of a retainer conical surface, a portion of a mandrel, and combinations thereof. Further, the axial end face 306 may be configured to contact a packing element.

The angle of the conical, inner circumferential face may be any angle that slides up the corresponding ramp/conical face of the retainer. In an embodiment, the angle is about 5 to about 60 degrees.

The spiral cut through the wedge shaped back-up ring is two flat surfaces. The spiral cut may be vertical cut at zero degrees from the vertical. The spiral cut may be about 0 to about 20 degrees from the vertical.

The back-up ring unwinds as it moves up the conical face of the retainer. The ends of the spiral shape turn and the outer surface 302 increases in diameter as the back-up ring slides up the angle of the conical ramp 218, 219.

There are several benefits to the back-up rings of the disclosure. The spiral ring shape acts as a spring as it expands up the ramp/cone shaped ends of the retainers. The spring force tries to pull the expanded back-up ring back down to the mandrel. The spring force may aid in retrieval because the back-up ring will return to, or nearly to, the run-in shape for retrieval.

Additionally, the spring force may also push on the packing elements to keep the element system energized. The element is less likely to lose pressure with the additional spring force provided by the back-up rings. Further, the spiral cut in the spiral ring may close after it is pushed up the ramp/cone ends of the retainer, thereby forming a labyrinth seal preventing element extrusion.

The back-up may be made of any material strong enough to retain the expanded packer element under downhole conditions. In an embodiment, the back-up ring starts as a metal wedge made from annealed stainless steel. The wedge is spiral cut with Electrical Discharge Machining (EDM). In some embodiments, the back-up ring is an investment casting. In another embodiment, the back-up ring is 3D printed in the finished shape.

One of skill in the art will realize that the back-up ring assemblies according to embodiments of this disclosure have many functions and advantages, including expanding out to contact the casing, possessing high expansion properties that retain the packing elements, potentially being retrievable because the back-up ring spring force may return the rings to the run-in shape, and potentially forming a labyrinth seal to prevent element extrusion.

### Use in Wellbore

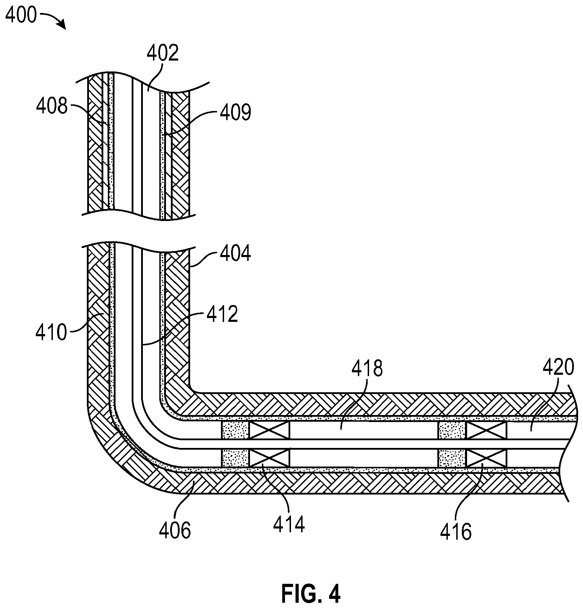

FIG. 4 depicts a well system 400 with packer assemblies according to certain embodiments of the present invention. The well system 400 includes a wellbore 410 extending through various earth strata. The wellbore 410 has a substantially vertical section 404 and a substantially horizontal section 406. The substantially vertical section 404 and the substantially horizontal section 406 may include a casing string 409 cemented 408 at an upper portion of the substantially vertical section 104. The substantially horizontal section 406 extends through a hydrocarbon bearing subterranean formation.

A tubing string 412 extends from the surface within wellbore 410, with an annulus 402. The tubing string 412 may provide a conduit for formation fluids to travel from the substantially horizontal section 106 to the surface. Packer assemblies 414, 416 may be positioned with the tubing string 412 in the horizontal section 406. Other components (not shown), such as production tubing, screens, inflow control devices, may be positioned in the wellbore 410. Packer assemblies 414, 416 may provide annular seals between the tubing string 412 and the casing string 408 to define zones 418, 420. One or both packer assemblies 414, 416 may provide desired load performance and be retrievable from the wellbore 410.

Although FIG. 4 depicts packer assemblies 414, 416 positioned in the substantially horizontal section 106, packer assemblies 414, 416 according to various embodiments of the present invention may be located, additionally or alternatively, in the substantially vertical section 404. Furthermore, any number of packer assemblies, including one, may be used. In some embodiments, packer assemblies 414, 416 may be disposed in simpler wellbores, such as wellbores having only a substantially vertical section.

## Claims

1. A wedge shaped spiral ring (300,114,214) including:
an outer circumferential face (302) configured to contact a wellbore casing or liner;
a conical, inner circumferential face (304) configured to contact a retainer (110,210), wherein the conical, inner circumferential face (304) is angled relative to the outer circumferential face (302) and the outer circumferential face (302) is configured to be parallel with the wellbore casing or liner; and
an axial end face (306) configured to contact a packing element (112,212), wherein the axial end face (306) is perpendicular to the outer circumferential face (302), wherein the wedge shaped spiral ring is cut as one continuous spiral.

2. The wedge shaped spiral ring (300,114,214) of claim 1, wherein the wedge shaped spiral ring (300,114,214) is metal.

3. The wedge shaped spiral ring (300,114,214) of claim 1, wherein the wedge shaped spiral ring (300,114,214) is a 3D printed wedge shaped ring.

4. The wedge shaped spiral ring (300,114,214) of claim 1, wherein the angle of the conical, inner circumferential face (304) is about 5 to about 60 degrees.

5. A back-up ring assembly comprising
a first wedge shaped spiral ring (300,114,214), wherein the first wedge shaped spiral ring (300,114,214) is the wedge shaped spiral ring (300,114,214) of any one of claims 1 to 4,
a packing element (112,212), and
a first retainer (110,210),
wherein the first wedge shaped spiral ring (300,114,214) is located between the packing element (112,212) and the first retainer (110,210).

6. The back-up ring assembly of claim 5, wherein the first retainer (110,210) includes a first retainer conical face, wherein an angle of the first retainer conical face is about 5 to about 60 degrees.

7. The back-up ring assembly of claim 5, further comprising
a second retainer (116,216), and
a second wedge shaped spiral ring (300,116,216) wherein the second wedge shaped spiral ring (300,116,216) is the wedge shaped spiral ring (300,116,216) of any one of claims 1 to 4,
wherein the first wedge shaped spiral ring (300,114,214) is positioned between a first side of the packing element (112,212) and the first retainer (110,210), and the second wedge shaped spiral ring (300,116,216) is positioned between a second side of the packing element (112,212) and the second retainer (116,216).

8. A method of retaining a packing element (112,212) comprising:
positioning a first wedge shaped spiral ring (300,114,214), wherein the first wedge shaped spiral ring (300,114,214) is the wedge shaped spiral ring of claim 1, in contact with a first side of the packing element (112,212), wherein the axial end face (306) is in contact with the first side of the packing element (112,212);
positioning a first retainer (110,210) in contact with the conical, inner circumferential face (304) of the first wedge shaped spiral ring (300,114,214) such that the first wedge shaped spiral ring (300,114,214) is positioned between the first side of the packing element (112,212) and the first retainer (110,210);
positioning a second wedge shaped spiral ring (300,116,216), wherein the second wedge shaped spiral ring (300,116,216) is the wedge shaped spiral ring of claim 1, in contact with a second side of the packing element (112,212), wherein the axial end face (306) is in contact with the second side of the packing element,
positioning a second retainer (111,211) in contact with the conical, inner circumferential face (304) of the second wedge shaped spiral ring (300,116,216) such that the second wedge shaped spiral ring (300,116,216) is positioned between the second side of the packing element (112,212) and the second retainer (111,211),
wherein the first wedge shaped spiral ring, second wedge shaped spiral ring, first retainer, second retainer, and packing element are located around a mandrel; and
drawing the first retainer (110,210) and second retainer (111,211) towards each other.

9. The method of claim 8, wherein an angle of the spiral relative to the axial end face (306) goes up to 20 degrees.

10. The method of claim 8, wherein the wedge shaped spiral ring (300,114,214,116,216) is a 3D printed wedge shaped spiral ring.

11. The method of claim 8, wherein the first retainer (110,210) and second retainer (111,211) include a first retainer conical face and a second retainer conical face, respectively, wherein an angle of the first retainer conical face and the second retainer conical face is about 5 to about 60 degrees.

12. The method of claim 8, wherein the angle of the conical, inner circumferential face (304) is about 5 to about 60 degrees.

## Patentansprüche

1. Keilförmiger Spiralring (300,114,214), umfassend:
eine Außenumfangsfläche (302), die ausgelegt ist, um mit einer Bohrlochummantelung oder -auskleidung in Kontakt zu kommen;
eine konische Innenumfangsfläche (304), die ausgelegt ist, um mit einer Halterung (110,210) in Kontakt zu kommen, wobei die konische Innenumfangsfläche (304) in Bezug auf die Außenumfangsfläche (302) abgewinkelt ist und die Außenumfangsfläche (302) ausgelegt ist, um mit der Bohrlochummantelung oder -auskleidung parallel zu sein; und
eine axiale Stirnfläche (306), die ausgelegt ist, um mit einem Packerelement (112,212) in Kontakt zu kommen, wobei die axiale Stirnfläche (306) orthogonal zur Außenumfangsfläche (302) ist, wobei der keilförmige Spiralring als kontinuierliche Spirale geschnitten ist.

2. Keilförmiger Spiralring (300,114,214) nach Anspruch 1, wobei der keilförmige Spiralring (300,114,214) Metall ist.

3. Keilförmiger Spiralring (300,114,214) nach Anspruch 1, wobei der keilförmige Spiralring (300,114,214) ein 3D-gedruckter Keilring ist.

4. Keilförmiger Spiralring (300,114,214) nach Anspruch 1, wobei der Winkel der konischen Innenumfangsfläche (304) etwa 5 bis etwa 60 Grad beträgt.

5. Stützringanordnung, umfassend
einen ersten keilförmigen Spiralring (300,114,214), wobei der erste keilförmige Spiralring (300,114,214) ein keilförmiger Spiralring (300,114,214) nach einem der Ansprüche 1 bis 4 ist,
ein Packerelement (112,212) und
eine erste Halterung (110,210),
wobei sich der erste keilförmige Spiralring (300,114,214) zwischen dem Packerelement (112,212) und der ersten Halterung (110,210) befindet.

6. Stützringanordnung nach Anspruch 5, wobei die erste Halterung (110,210) eine erste konische Halterungsfläche aufweist, wobei der Winkel der ersten konischen Halterungsfläche etwa 5 bis etwa 60 Grad beträgt.

7. Stützringanordnung nach Anspruch 5, außerdem umfassend
eine zweite Halterung (116,216) und
einen zweiten keilförmigen Spiralring (300,116,216), wobei der zweite keilförmige Spiralring (300,116,216) ein keilförmiger Spiralring (300,116,216) nach einem der Ansprüche 1 bis 4 ist,
wobei der erste keilförmige Spiralring (300,114,214) zwischen einer ersten Seite des Packerelements (112,212) und der ersten Halterung (112,210) positioniert ist und der zweite keilförmige Spiralring (300,116,216) zwischen einer zweiten Seite des Packerelements (112,212) und der zweiten Halterung (116,216) positioniert ist.

8. Verfahren zum Halten eines Packerelements (112,212), umfassend:
Positionieren eines ersten keilförmigen Spiralrings (300,114,214), wobei der erste keilförmige Spiralring (300,114,214) ein keilförmiger Spiralring nach Anspruch 1 ist, in Kontakt mit einer ersten Seite des Packerelements (112,212), wobei die axiale Stirnfläche (306) in Kontakt mit der ersten Seite des Packerelements (112,212) ist;
Positionieren einer ersten Halterung (110,210) in Kontakt mit der konischen Innenumfangsfläche (304) des ersten keilförmigen Spiralrings (300,114,214), sodass der erste keilförmige Spiralring (300,114,214) zwischen der ersten Seite des Packerelements (112,212) und der ersten Halterung (110,210) positioniert ist;
Positionieren eines zweiten keilförmigen Rings (300,116,216), wobei der zweite keilförmige Spiralring (300,116,216) ein keilförmiger Spiralring nach Anspruch 1 ist, in Kontakt mit einer zweiten Seite des Packerelements (112,212), wobei die axiale Stirnfläche (306) in Kontakt mit der zweiten Seite des Packerelements ist,
Positionieren einer zweiten Halterung (111,211) in Kontakt mit der konischen Innenumfangsfläche (304) des zweiten keilförmigen Spiralrings (300,116,216), sodass der zweite keilförmige Spiralring (300,116,216) zwischen der zweiten Seite des Packerelements (112,212) und der zweiten Halterung (111,211) positioniert ist, wobei sich der erste keilförmige Spiralring, der zweite keilförmige Spiralring, die erste Halterung, die zweite Halterung und das Packerelement um einen Dorn befinden; und
Ziehen der ersten Halterung (110,210) und der zweite Halterung (111,211) zueinander.

9. Verfahren nach Anspruch 8, wobei der Winkel der Spirale und der axialen Stirnfläche (306) bis zu 20 Grad betragen kann.

10. Verfahren nach Anspruch 8, wobei der keilförmige Spiralring (300,114,214,116,216) ein 3D-gedruckter keilförmiger Spiralring ist.

11. Verfahren nach Anspruch 8, wobei die erste Halterung (110,210) und die zweite Halterung (111,211) eine erste konische Halterungsfläche bzw. eine zweite konische Halterungsfläche umfassen, wobei der Winkel zwischen der ersten konischen Halterungsfläche und der zweiten konischen Halterungsfläche etwa 5 bis etwa 60 Grad beträgt.

12. Verfahren nach Anspruch 8, wobei der Winkel der konischen Innenumfangsfläche (304) etwa 5 bis etwa 60 Grad beträgt.

## Revendications

1. Bague en spirale en forme de coin (300, 114, 214) comportant :
une face circonférentielle extérieure (302) configurée pour entrer en contact avec un tubage ou un revêtement de puits de forage ;
une face circonférentielle intérieure conique (304) configurée pour entrer en contact avec un dispositif de retenue (110,210), dans laquelle la face circonférentielle intérieure conique (304) est inclinée par rapport à la face circonférentielle extérieure (302) et la face circonférentielle extérieure (302) est configurée pour être parallèle au tubage ou au revêtement du puits de forage ; et
une face d'extrémité axiale (306) configurée pour entrer en contact avec un élément de garnissage (112, 212), dans laquelle la face d'extrémité axiale (306) est perpendiculaire à la face circonférentielle extérieure (302), dans laquelle la bague en spirale en forme de coin est découpée en une spirale continue.

2. Bague en spirale en forme de coin (300, 114, 214) selon la revendication 1, dans laquelle la bague en spirale en forme de coin (300, 114, 214) est en métal.

3. Bague en spirale en forme de coin (300, 114, 214) selon la revendication 1, dans laquelle la bague en spirale en forme de coin (300, 114, 214) est une bague en forme de coin imprimée en 3D.

4. Bague en spirale en forme de coin (300, 114, 214) selon la revendication 1, dans laquelle l'angle de la face circonférentielle intérieure conique (304) est d'environ 5 à environ 60 degrés.

5. Ensemble de bague d'appui comprenant une première bague en spirale en forme de coin (300, 114, 214), dans lequel la première bague en spirale en forme de coin (300, 114, 214) est la bague en spirale en forme de coin (300, 114, 214) selon l'une quelconque des revendications 1 à 4,
un élément de garnissage (112, 212), et
un premier élément de retenue (110,210),
dans lequel la première bague en spirale en forme de coin (300, 114, 214) est située entre l'élément de garnissage (112, 212) et le premier élément de retenue (110,210) .

6. Ensemble de bague d'appui selon la revendication 5, dans lequel le premier dispositif de retenue (110,210) comporte une première face conique de dispositif de retenue, dans lequel un angle de la première face conique de dispositif de retenue est d'environ 5 à environ 60 degrés.

7. Ensemble de bague d'appui selon la revendication 5, comprenant en outre
un second élément de retenue (116, 216), et
une seconde bague en spirale en forme de coin (300, 116, 216) dans lequel la seconde bague en spirale en forme de coin (300, 116, 216) est la bague en spirale en forme de coin (300, 116, 216) selon l'une quelconque des revendications 1 à 4,
dans lequel la première bague en spirale en forme de coin (300, 114, 214) est positionnée entre un premier côté de l'élément de garnissage (112, 212) et le premier élément de retenue (110,210), et la seconde bague en spirale en forme de coin (300, 116, 216) est positionnée entre un second côté de l'élément de garnissage (112, 212) et le second élément de retenue (116, 216).

8. Procédé de retenue d'un élément de garnissage (112, 212) comprenant :
le positionnement d'une première bague en spirale en forme de coin (300, 114, 214), dans lequel la première bague en spirale en forme de coin (300, 114, 214) est la bague en spirale en forme de coin selon la revendication 1, en contact avec un premier côté de l'élément de garnissage (112, 212), dans lequel la face d'extrémité axiale (306) est en contact avec le premier côté de l'élément de garnissage (112, 212) ;
le positionnement d'un premier élément de retenue (110, 210) en contact avec la face circonférentielle intérieure conique (304) de la première bague en spirale en forme de coin (300, 114, 214) de sorte que la première bague en spirale en forme de coin (300, 114, 214) est positionnée entre le premier côté de l'élément de garnissage (112, 212) et le premier élément de retenue (110, 210) ;
le positionnement d'une seconde bague en spirale en forme de coin (300, 116, 216), dans lequel la seconde bague en spirale en forme de coin (300, 116, 216) est la bague en spirale en forme de coin selon la revendication 1, en contact avec un second côté de l'élément de garnissage (112, 212), dans lequel la face d'extrémité axiale (306) est en contact avec le second côté de l'élément de garnissage,
le positionnement d'un second élément de retenue (111, 211) en contact avec la face circonférentielle intérieure conique (304) de la seconde bague en spirale en forme de coin (300, 116, 216) de sorte que la seconde bague en spirale en forme de coin (300, 116, 216) est positionnée entre le second côté de l'élément de garnissage (112, 212) et le second élément de retenue (111, 211),
dans lequel la première bague en spirale en forme de coin, la seconde bague en spirale en forme de coin, le premier élément de retenue, le second élément de retenue et l'élément de garnissage sont situés autour d'un mandrin ; et
le fait de tirer le premier dispositif de retenue (110, 210) et le second dispositif de retenue (111, 211) l'un vers l'autre.

9. Procédé selon la revendication 8, dans lequel un angle de la spirale par rapport à la face d'extrémité axiale (306) va jusqu'à 20 degrés.

10. Procédé selon la revendication 8, dans lequel la bague en spirale en forme de coin (300, 114, 214, 116, 216) est une bague en spirale en forme de coin imprimée en 3D.

11. Procédé selon la revendication 8, dans lequel le premier dispositif de retenue (110, 210) et le second dispositif de retenue (111, 211) comportent une première face conique de dispositif de retenue et une seconde face conique de dispositif de retenue, respectivement, dans lequel un angle de la première face conique de dispositif de retenue et de la seconde face conique de dispositif de retenue est d'environ 5 à environ 60 degrés.

12. Procédé selon la revendication 8, dans lequel l'angle de la face circonférentielle intérieure conique (304) est d'environ 5 à environ 60 degrés.
